Europäisches Patentamt

European Patent Office

Office européen des brevets

(11) Veröffentlichungsnummer: **0 229 376 B1**

# EUROPÄISCHE PATENTSCHRIFT

(45) Veröffentlichungstag der Patentschrift: **15.05.91**

(51) Int. Cl.⁵: **F16C 3/08**, F01C 21/00

(21) Anmeldenummer: **86117938.0**

(22) Anmeldetag: **23.12.86**

(54) **Exzenterwelle einer Rotationskolbenbrennkraftmaschine.**

(30) Priorität: **23.12.85 DE 3545820**

(43) Veröffentlichungstag der Anmeldung:
**22.07.87 Patentblatt 87/30**

(45) Bekanntmachung des Hinweises auf die
Patenterteilung:
**15.05.91 Patentblatt 91/20**

(84) Benannte Vertragsstaaten:
**AT DE FR IT**

(56) Entgegenhaltungen:
**DE-A- 2 950 275        DE-B- 1 125 228**
**DE-C- 729 777          FR-A- 696 398**
**FR-A- 1 242 570        US-A- 2 175 156**

(73) Patentinhaber: **Wankel GmbH**
**Attilastrasse 56**
**W-1000 Berlin 42(DE)**

(72) Erfinder: **Eiermann, Dankwart**
**Kirchstrasse 43**
**W-8995 Weissensberg-West(DE)**

(74) Vertreter: **Freiherr von Welser, Hubert**
**Danziger Strasse 15**
**W-8000 München 40(DE)**

## Beschreibung

Die Erfindung betrifft die Exzenterwelle einer Rotationskolbenbrennkraftmaschine der Trochoidenbauart mit einem aus einer zweibogigen Mantellaufbahn und Seitenteilen bestehenden Gehäuse, das von einer Exzenterwelle durchsetzt ist, auf deren Exzenter bzw. Exzentern ein dreieckiger Kolben in ständigem gleitenden Eingriff seiner Dichtteile an der Mantellaufbahn in einer Planetenbewegung umläuft, und bei dem zwischen einem der Seitenteile und Kolben auf einer zur Achse der Exzenterwelle senkrechten Seitenwand des oder der Exzenter ein Synchrongetriebe vorgesehen ist.

Derartige Brennkraftmschinen, wie sie z.B. aus DE-B-1 125 228 bekannt sind, haben vor herkömmlichen Motoren, insbesondere Flugmotoren, den Vorteil, bei gleicher Leistung wesentlich geringere Ausmaße, insbesondere in axialer Draufsicht zu haben. Der größte Gewichtsanteil einer solchen Rotationskolbenbrennkraftmaschine stellt die Exzenterwelle dar, was sich, je kompakter und im Verhältnis zu ihren Ausmaßen leistungsstärker eine Maschine ausgelegt ist, desto mehr auswirkt.

In DE-OS 29 50 275 (Gesenkschmiede Schneider GmbH) wurden mit Exzentern versehene hohle Nockenwellen einer achtzylindrigen Brennkraftmaschine beschrieben und dargestellt, die im sogenannten Innendruckumformungsverfahren hergestellt werden sollten. Bei diesem Verfahren wird ein rohrförmiger Rohling in ein geschlossenes, die Negativform des herzustellenden Werkstückes bildendes Werkzeug von innen heraus unter hohem hydraulischen Druck kalt gepreßt. Im axialen Schnitt sollen dann die Innenkonturen der Außenkontur mit einer im Verhältnis zum Querschnitt geringen Wandstärke folgen. Dieses Verfahren, das bei der großen Materialumsetzung im Kalten hohe Festigkeiten ergeben soll, ist als bekannt genannt, aber nicht im einzelnen beschrieben worden. Ferner ist in dieser OS behauptet, daß man auf diese Weise nicht nur Nockenwellen, wie die dargestellte, sondern auch Kurbelwellen usw. für Brennkraftmaschinen herstellen könne. Tatsächlich war es aber zu diesem Zeitpunkt insbesondere auch der Anmelderin dieses Rechts nicht möglich, auch nur die dargestellte Nockenwelle herzustellen. Die Nocken mußten vielmehr nachträglich aufgeschweißt werden. Es liegt daher eine unzureichende Offenbarung vor und es war dem Fachmann nicht möglich, solche Wellen beliebig oft nach dieser Lehre herzustellen. Mehr noch wie für Nockenwellen muß das für Exzenterwellen gelten, da dort die notwendige Materialumsetzung um ein Vielfaches größer und Materialbewegungen wie in einem Ziehverfahren um rechte Winkel notwendig wären. Die Nocken der in der genannten OS dargestellten Welle weisen eine bis zu Ihrer Anlauffläche reichende schräg ausgerundete Übergangskurve auf, was zeigt, daß die Ausbildung von Exzentern üblicher Bauweise mit dem offenbarten Verfahren nicht möglich wäre, da hier zerstörende Scherkräfte auftreten. Gerade diese Schwierigkeiten mußten den Fachmann von dem Ziel ablenken, hohle Exzenterwellen nach dem Vorschlag der genannten OS herzustellen.

Es ist an sich möglich, hohle Wellen aus einzelnen Rohrstücken zusammenzuschweißen, jedoch ist ein solches Verfahren aufwendig und bei den erhaltenen Wellen müssen Materialinhomogenitäten und -schwächungen an den Schweißnähten hingenommen werden.

Die Herstellung derartig hohler Wellen, wie sie in der vorstehenden Veröffentlichung in Wirklichkeit nur als Aufgabenstellung genannt sind, ist auch nicht durch Ausbohren von geschmiedeten Wellen möglich, da hiermit die exzentrischen Teile nicht erreicht werden können. Dies wäre nur mit Fräsen mit einem unvertretbaren Aufwand und nur bei geringeren Exzentrizitäten durchführbar, wobei Materialverschwächungen infolge Anschneidens des Faserverlaufes hingenommen werden müßten. Auch sind derartig hergestellte hohlen Wellen für die eingangs genannten Maschinen nicht bekannt. Es wurden nur Bohrungen für die Durchführung von Öl zu den Exzenter- und Wellenlagern mit entsprechend geringerem Querschnitt vorgesehen, so in DE-OS 25 20 843 (General Motors Co.). Ferner zeigt DE-PS 11 25 228 (eigene Anmeldung) in Fig. 8 eine zu Kühlzwecken mit größerer Weite angebohrte Welle mit dünnen Kühlölleitungen im Exzenter, die abgesehen von der Ineffektivität einer solchen Kühlung nur sehr schwer herstellbar sind und kaum das Gewicht des Exzenters, der die wesentliche Masse solcher Wellen darstellt, verringern können.

Aufgabe der Erfindung war die Herstellung einer Exzenterwelle, die bei einer Gewichtseinsparung auf einem Bruchteil des Gewichts gleichartiger üblicher Exzenterwellen mindestens gleiche Festigkeitseigenschaften aufweist, wobei das Herstellungsverfahren einfach, kostengünstig und für Massenfertigung geeignet ist und bei dem sich die Bearbeitung auf Abdrehen der Exzenter- und Wellenlager beschränken kann.

Die Lösung dieser Aufgabe ergibt sich aus den Ansprüchen.

Die Herstellung der Hohlwelle kann in einem bekannten hydraulischen Innendruckumformungsverfahren geschehen, bei dem die vorgeformte axial durchbohrte Welle in einem Werkzeug von ihrer axialen Bohrung her unter hohem hydraulischem Druck auf ihren Sollwert aufgeweitet wird. Da für die Exzenter mehr Material benötigt wird, als in dem im Werkzeug liegenden rohrförmigen Rohling vorhanden ist, muß während des Umformvorganges Material zugeführt werden. Dazu wird der über das Werkzeug hinausragende Rohling während des Umformvorganges nachgeschoben. Wie bereits eingangs erwähnt, kann die Ausformung des Exzenters an seinen Seitenwänden nur über eine Rundung des Werkzeugs mit ausreichend großem Radius erfolgen, um Scherwirkungen zu vermeiden. Die Seite des Exzenters wenigstens, an der das Synchrongetriebe des Kolbens anliegt, muß jedoch bis auf einen geringen Übergangsradius, bei Motoren von etwa 40 bis 50 PS in der Größe von 5 bis 10 mm, in einer zur Wellenachse senkrechten Ebene liegen, um Platz für das Synchrongetriebe bei ausreichender Auflagefläche des Exzenterlagers zu haben. Diese im Innendruckumformungsverfahren nicht ausführbare Abwinkelung der Exzenterseitenwand zur Wellenachse muß nach Herausnahme der verpreßten Werkstückes aus der Werkzeug durch Hämmern oder Kaltpressen erzeugt werden, wobei eine in den Wellenhohlraum eingeführter Dorn das Eindrücken verhindert. Durch die eintretende Verformung ergibt sich eine höhere Materialfestigkeit und Verwindungssteifigkeit mit ungestörtem gleichmäßigem Faserverlauf, so daß eine Welle mit sehr guten Materialeigenschaften entsteht, die gleichzeitig nur etwa ein Achtel des Gewichts einer Vollwelle gleicher Ausmaße aufweist. Vor allem ergibt sich ein Vorteil gegenüber herkömmlichen geschmiedeten Wellen, bei denen, vor allem in Abschnitten größerer Materialstärke, wie den Exzentern, nie eine durchgehend gleichmäßige und gute Festigkeitseigenschaft erreicht werden kann.

Ausführungsbeispiele, die jeweils Wellen für zweischeibige Maschinen sind, werden im folgenden anhand der Zeichnungen im einzelnen beschrieben. Es zeigen:

Fig. 1 einen axialen Schnitt durch eine flüssigkeitsgekühlte Rotationskolbenbrennkraftmaschine mit erfindungsgemäßer Welle,

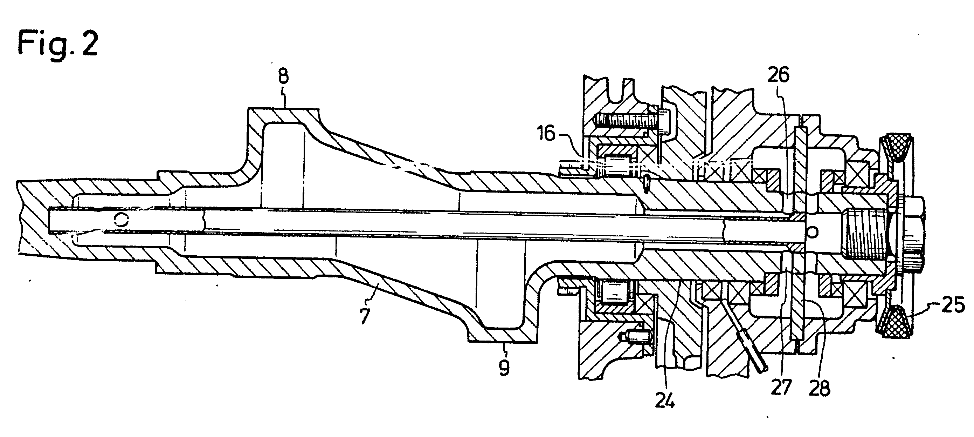

Fig. 2 eine weitere Ausführungsform einer solchen Welle,

Fig. 3 eine Teilvergrößerung aus Fig. 1

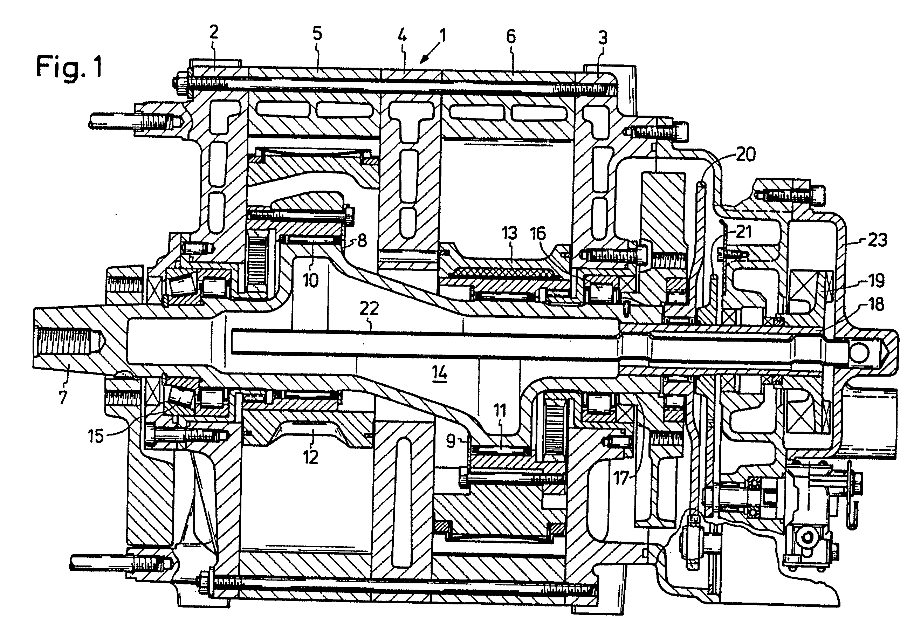

Die in Fig. 1 dargestellte Brennkraftmaschine ist ein Flugmotor mit zwei Scheiben. Sein Gehäuse 1 weist zwei Seitenscheiben 2 und 3 und ein Mittelteil 4 auf, zwischen denen die Mantelteile 5 und 6 angeordnet sind. Die das Gehäuse 1 durchsetzende Exzenterwelle 7, auf deren Exzentern 8 und 9 auf Wälzlagern 10 und 11 die Kolben 12 und 13 umlaufen, ist hohl ausgebildet. Der Innenraum 14 der Exzenterwelle 7 folgt in seinen Innenwänden der Außenkontur der Welle, insbesondere in deren Exzentern 8 und 9. Dies hat den Vorteil, daß durch Einbeziehung dieses Innenraumes 14 in das Flüssigkeitskühlsystem des Gehäuses 1 die Exzenterlager 10 und 11 unmittelbar gekühlt werden können. Dies gilt auch für die Wellenlager 15 und 16 in den Gehäuseseitenteilen 2 und 3.

In das offene rechte Ende 17 der Exzenterwelle 7 ist ein Rohr 18 eingepreßt, das sie über das Wellenlager 16 hinaus verlängert. Dieses Rohr 18 kann zum Antrieb der Zusatzaggregate wie Umwälzpumpe 19, Lichtmaschine und anderes dienen. Dabei ist die Umwälzpumpe 19 unmittelbar auf das Rohr 18 aufgepreßt, während der Antrieb der übrigen Zusatzaggregate über die Zahnräder 20 und 21 erfolgt. Diese Anordnung hat den Vorteil, daß eine weitere Gewichtsersparnis entsteht, da die Exzenterwelle 7 kürzer gehalten werden kann und nur mit dem leichten Rohr 18 verlängert ist, das für den Antrieb der Zusatzaggregate ausreicht. Die Zuführung der Kühlflüssigkeit erfolgt über ein Zuführungsrohr 22, das mit der Exzenterwelle 7 mitdreht oder das in einem Gehäusedeckel 23 befestigt feststehen kann. Die Kühlflüssigkeit wird über eine Bohrung in dem Gehäusedeckel 23 zugeführt, nach der ein Bypass des Gehäusekühlmittelumlaufens abgezweigt ist. Der Rückfluß des Kühlwassers erfolgt in dem ringförmigen Zwischenraum zwischen dem Zuführungsrohr 22 und dem Rohr 18.

Wie dies Fir. 2 zeigt, kann die hohle Exzenterwelle 7 auch über das Wellenlager 16 hinaus verlängert sein. Auf das über das Lager 16 hinausstehende Wellenende 24 ist ein Keilriemenantriebsrad 25 aufgekeilt, das den Antrieb der Zusatzaggregate übernimmt. Die Zuführung der Kühlflüssigkeit erfolgt über die Öffnungen 26 und 27 im Wellenende 24, die durch eine Trennscheibe voneinander getrennt Zu- und Abfluß des Kühlmittels besorgen.

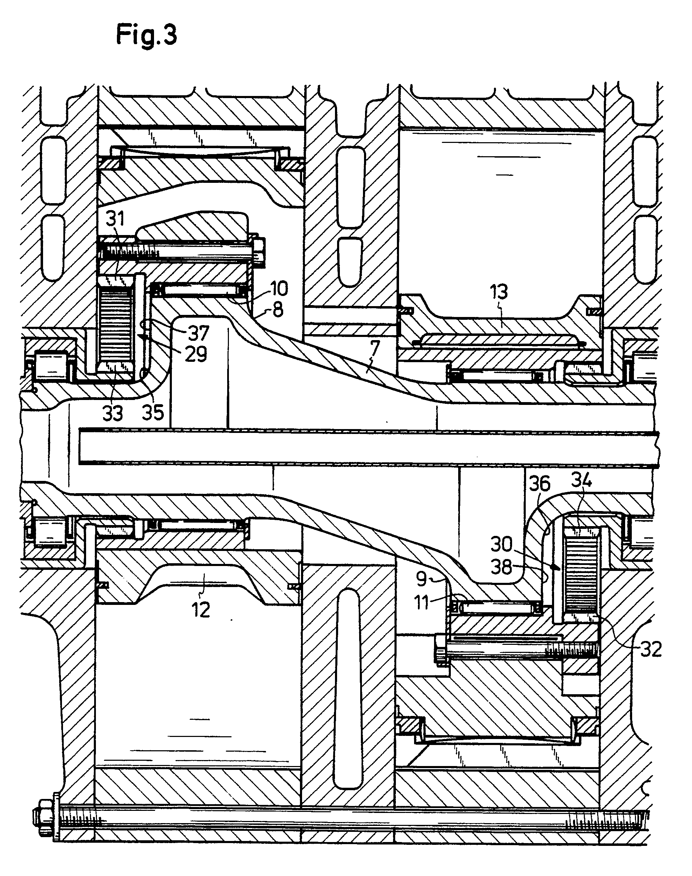

In Fig. 3, die eine Vergrößerung aus Fig. 1 ist, wird der Axialschnitt der Ausbildung der Exzenter durch das Exzentrizitätsmaximum und -minimun dargestellt. Das Das Synchrongetriebe 29 bzw. 30 der Kolben 8 und 9 weist ein an dem Kolben befestigtes Hohlrad 31 bzw. 32 und ein an den Gehäuseseitenteilen 2 bzw. 3 um die Exzenterwelle 7 befestigtes Ritzel 33 bzw. 34 auf. Der Radius des Überganges 35 bzw. 36 an der Exzenterwelle 7 zu den Synchrongetrieben 29 bzw. 30 anliegenden Seitenwänden 37, 38 der Exzenter 8, 9, die in zur Achse der Exzenterwelle 7 senkrechter Ebene liegen, muß so klein sein, daß genügend Raum für die Synchrongetriebe 29 und 30 und eine ausreichende Lagerfläche für die Exzenterlager 10 und 11 bleibt. Im vorliegenden Ausführungsbeispiel, einem Motor mit 90 PS Leistung und einem größten Durchmesser von 30 cm beträgt dieser Übergangsradius der Außenfläche der Exzenterwelle 7 bis 8 mm. Da eine solche Umbiegung nicht im genannten Umformungsverfahren herstellbar ist, da dann entweder an der Werkzeugkante Scherkräfte auftreten oder der Materialfluß in einer eine gleichmäßig starke Wandung der Exzenterwelle 7 erzeugenden Weise möglich ist, muß diese Ausformung des Übergangsradius 35 bzw. 36 nachträglich in einem Kaltverformungsverfahren, z.B. durch Hämmern oder Pressen erzeugt werden. Auf den dem Synchrongetriebe 29, 30 abgewandten Seiten der Exzenter 8 und 9 kann die Übergangskurve zwischen Exzenter und Welle in einer dem Materialfluß im genannten Umformungsverfahren gemäßen Weise ausgebildet sein.

Bezugszeichenverzeichnis

Fig. 1

| | |
|---|---|
| 1 | Gehäuse |
| 2,3 | Seitenteile |
| 4 | Mittelteil |
| 5,6 | Mantelteile |
| 7 | Exzenterwelle |
| 8,9 | Exzenter |
| 10,11 | Exzenterlager |
| 12,13 | Kolben |
| 14 | Innenraum zu 7 |
| 15,16 | Wellenlager |
| 17 | rechtes Wellenende |
| 18 | Rohr |
| 19 | Umwälzpumpe |
| 20,21 | Zahnräder |
| 22 | Zuführungsrohr |
| 23 | Gehäusedeckel |

Fig. 2

| | |
|---|---|
| 24 | Wellenende |
| 25 | Keilriemenabtrieb |
| 26,27 | Öffnungen in 25 |
| 28 | Trennscheibe |

**Ansprüche**

1. Exzenterwelle (7) einer Rotationskolbenbrennkraftmaschine der Trochoidenbauart mit einem aus einer zweibogigen Mantellaufbahn (5,6) und Seitenteilen (2,3) bestehenden Gehäuse (1), das von einer Exzenterwelle (7) durchsetzt ist, auf deren Exzenter bzw. Exzentern (8,9) ein dreieckiger Kolben (12,13) in ständigem gleitenden Eingriff seiner Dichtteile an der Mantellaufbahn (5,6) in einer Planetenbewegung umläuft, und bei dem zwischen einem der Seitenteile (2,3) und Kolben (12,13) auf einer zur Achse der Exzenterwelle (7) senkrechten Seitenwand des oder der Exzenter (8,9) ein Synchrongetriebe vorgesehen ist, dadurch gekennzeichnet, daß die einstückige Exzenterwelle (7) vollständig hohl ausgebildet ist, wobei die Innenwände der Exzenterwelle (7) zu den Außenflächen der Exzenterwelle (7) im wesentlichen parallel verlaufen, und wobei der Übergangsradius zwischen der senkrechten Seitenwand des Exzenters (8,9) und des sich anschließenden axialen Abschnittes der Exzenterwelle (7) nicht größer als 10 mm ist.

2. Rotationskolbenbrennkraftmaschine mach Anspruch 1, dadurch gekennzeichnet, daß die Exzenterwelle (7) in einem hydraulischen Innendruckumformungsverfahren hergestellt ist.

3. Rotationskolbenbrennkraftmaschine nach Anspruch 1, 2 dadurch gekennzeichnet, daß die Exzenterwelle (7) an ihrem offenen Ende (25) durch ein in sie eingepreßtes und mit ihr koaxiales Rohr (18) über das Wellenlager (16) hinaus zur Aufnahme von Abtriebsrädern für Zusatzaggregate verlängert ist.

4. Rotationskolbenbrennkraftmaschine nach Anspruch 1, 2 dadurch gekennzeichnet, daß ein über ein Wellenlager (16) hinausreichendes Ende (25) der Exzenterwelle (7) Öffnungen (27, 28) für die Zu- und Abführung des flüssigen Kühlmittels aufweist.

**Claims**

1. Eccentric shaft (7) of a rotary piston internal combustion engine of the trochoidal type comprising a housing having a two-lobed peripheral running surface (5,6) and side walls (2,3) an eccentric carrying shaft extending through the housing, and a three-cornered piston (12,13) rotating in a planetary motion on the eccentric or eccentrics (8,9) respectively with its sealing components in continuous sliding engagement with the peripheral running surface (5,6) and in which between one of the side-walls (2,3) and the piston (12,13) a side-wall of the eccentric or eccentrics (8,9) respectively adjacent to a corresponding phase gear drive lies in a plane which is perpendicular to the axis of the shaft (7) characterized by an eccentric shaft (7) which consists of one piece being completely hollow and having the eccentric (7) an internal contour which is substantially parallel to the external contour of the eccentric shaft (7), and the temporary radius between the perpendicular side-wall of the eccentric (8,9) and the adjacent axial segment of the eccentric (7) not being bigger than 10mm.

2. A rotary piston internal combustion engine according to claim 1, characterized by that the eccentric shaft (7) has been formed by a hydraulic inside transformation pressure process.

3. A rotary piston internal combustion engine according to claim 1, 2,
characterized by an eccentric shaft (7) in which the shaft is open at one end (25) and an coaxial extension tube (18) pressed into the open end of the shaft extends itself beyond the eccentric shaft bearing (16) at that end of the shaft to receive the drive means for driving the auxiliary devices.

4. A rotara piston internal combustion engine according to claim 1, 2,
characterized that the openings (27,28) for the supply and escape of liquid coolant are provided in an end part (25) of the eccentric shaft (7) which itself extends beyond an eccentric shaft bearing (16).

**Revendications**

1. Arbre d'excentrique (7) d'un moteur à combustion interne à piston rotatif du type à trochoïdes, comportant un carter (1), constitué d'une trajectoire d'enveloppe (5, 6) bi-arquée et de parties latérales (2, 3), lequel carter est traversé par un arbre d'excentrique (7) sur le ou les excentrique(s) (8, 9) duquel un piston triangulaire (12, 13) dont les parties d'étanchéité sont continuellement en prise avec la trajectoire d'enveloppe (5, 6), tourne dans un mouvement planétaire et pour lequel est prévu un mécanisme de synchronisation, entre l'une des parties latérales (2, 3) et le piston (12, 13), sur une paroi latérale du ou des excentrique(s) (8, 9), perpendiculaire à l'axe de l'arbre d'excentrique (7), caractérisé en ce que l'arbre d'excentrique (7), d'une seule pièce, est totalement creux, les parois intérieures de l'arbre d'excentrique (7) étant sensiblement parallèles aux faces extérieures de l'arbre d'excentrique (7) et le rayon de transition, entre la paroi latérale verticale de l'excentrique (8, 9) et la section axiale adjacente de l'arbre d'excentrique (7), n'étant pas supérieur à 10 mm.

2. Moteur à combustion interne à piston rotatif selon la revendication 1, caractérisé en ce que l'arbre d'excentrique (7) est fabriqué par un procédé hydraulique de formage par pression intérieure.

3. Moteur à combustion interne à piston rotatif selon les revendications 1 et 2, caractérisé en ce que l'arbre d'excentrique (7) est prolongé, à son extrémité ouverte (25), par un tube (18) coaxial avec l'arbre d'excentrique et pressé à l'intérieur de celui-ci, au-delà du palier d'arbre (16), en vue de recevoir des roues menées de groupes accessoires.

4. Moteur à combustion interne à piston rotatif selon les revendications 1 et 2, caractérisé en ce qu'une extrémité (25) de l'arbre d'excentrique (7), dépassant un palier d'arbre (16), présente des orifices (27, 28) pour l'arrivée et le départ du réfrigérant liquide.

Fig.1

EP 0 229 376 B1

Fig. 2

EP 0 229 376 B1

Fig.3